(19) Europäisches Patentamt / European Patent Office / Office européen des brevets

(11) **EP 2 708 521 B1**

(12) **EUROPEAN PATENT SPECIFICATION**

(45) Date of publication and mention
of the grant of the patent:
**04.10.2017 Bulletin 2017/40**

(51) Int Cl.:
**C04B 35/44** (2006.01)  **C01F 7/16** (2006.01)
**H01B 13/00** (2006.01)  **C04B 35/64** (2006.01)
**H01B 1/08** (2006.01)

(21) Application number: **12786123.5**

(22) Date of filing: **07.05.2012**

(86) International application number:
**PCT/JP2012/061687**

(87) International publication number:
**WO 2012/157461 (22.11.2012 Gazette 2012/47)**

(54) **METHOD FOR PRODUCING CONDUCTIVE MAYENITE COMPOUND**

VERFAHREN ZUR HERSTELLUNG EINER LEITFÄHIGEN MAYENIT-VERBINDUNG

PROCÉDÉ DE PRODUCTION D'UN COMPOSÉ DE MAYÉNITE CONDUCTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2011 JP 2011107902
07.10.2011 JP 2011223029**

(43) Date of publication of application:
**19.03.2014 Bulletin 2014/12**

(73) Proprietor: **Asahi Glass Company, Limited
Tokyo 100-8405 (JP)**

(72) Inventors:
• **ITO, Kazuhiro
Tokyo 100-8405 (JP)**
• **WATANABE, Toshinari
Tokyo 100-8405 (JP)**
• **WATANABE, Satoru
Tokyo 100-8405 (JP)**
• **MIYAKAWA, Naomichi
Tokyo 100-8405 (JP)**

(74) Representative: **Müller-Boré & Partner
Patentanwälte PartG mbB
Friedenheimer Brücke 21
80639 München (DE)**

(56) References cited:
**WO-A1-2005/077859    WO-A1-2006/129674
WO-A1-2006/129675    WO-A1-2006/129675
WO-A1-2007/060890    WO-A1-2009/028242
WO-A1-2010/074092    WO-A1-2010/074092**

EP 2 708 521 B1

**Description**

The present invention relates to a method of manufacturing an electrical conductive mayenite compound.

A mayenite compound has a typical composition expressed as $12CaO \cdot 7Al_2O_3$, and has a characteristic crystalline structure including three-dimensionally connected cages, each having a diameter about 0.4 nm. A skeletal structure structuring the cages is positively charged, and forms twelve cages per unit lattice. 1/6 of the cages are occupied with oxygen ions in their inside, respectively, in order to satisfy an electrical neutrality condition of the crystal. However, the oxygen ions inside the cages have a chemical characteristic different from the oxygen ions composing the skeletal structure. Thus, the oxygen ions inside the cages are specifically referred to as "free oxygen ions". The mayenite compound is also expressed as $[Ca_{24}Al_{28}O_{64}]^{4+} \cdot 2O^{2-}$ (Non-Patent Document 1).

When a part of or all of the free oxygen ions inside the cages of the mayenite compound are substituted for by electrons, the mayenite compound is provided with an electrical conductivity. This is because, the electrons included in the cages of the mayenite compound can freely move in the crystal without being tied by the respective cage (Patent Document 1). Such a mayenite compound with the electrical conductivity is referred to, in particular, as an "electrical conductive mayenite compound".

Such an electrical conductive mayenite compound may be manufactured by, for example, a method of manufacturing by putting a mayenite compound powder in a carbon container with a cover and performing a heat treatment at 1300 °C under nitrogen gas atmosphere (Patent Document 2). Hereinafter this method is referred to as a "conventional method 1".

Further, such an electrical conductive mayenite compound may be manufactured by a method of manufacturing by putting a mayenite compound in an alumina container with a cover with aluminum and performing a heat treatment at 1300 °C in vacuum (Patent Document 2). Hereinafter, this method is referred to as a "conventional method 2".

[Patent Document 1] WO 2005/000741
[Patent Document 2] WO 2006/129674
[Non-Patent Document 1] F.M.Lea, C.H.Desch, The Chemistry of Cement and Concrete, 2nd ed., p.52, Edward Arnold&Co., London, 1956

WO2010/074092 discloses a method of making a mayenite compound, where first calcium carbonate and alumina powders are mixed and calcined in order to get a mayenite powder. The mayenite powder is moulded and sintered. The sintered mayenite compact is then heat treated in a container containing both carbon and metallic aluminium in order to reduce the mayenite.

The electrical conductive mayenite compound is expected to be applied as an electrode material for a fluorescent lamp, for example. However, according to the above described conventional method 1, there is a problem in that it is difficult to obtain an electrical conductive mayenite compound with a sufficiently high electron density (in other words, whose electrical conductivity is sufficiently high enough). The electron density of the electrical conductive mayenite compound obtained by the conventional method 1 is less than $3 \times 10^{20}$ cm$^{-3}$.

If such an electrical conductive mayenite compound with a low electron density is used as an electrode material for a fluorescent lamp or the like, for example, Joule heat is generated due to the low electrical conductivity to cause a high temperature of the electrical conductive mayenite compound. In general, the fluorescent lamp lights within a few seconds, Joule heat is generated every time the fluorescent lamp lights and a thermal stress is generated in the electrical conductive mayenite compound. When the thermal stress is accumulated, there is a possibility that a cracking or a breaking occurs in the electrical conductive mayenite compound to be damaged. With such background, it is required to further increase electron density of the electrical conductive mayenite compound in order to increase the electrical conductivity of the electrical conductive mayenite compound. Here, it is known that the electron density of the electrical conductive mayenite compound is at most 2.3 x $10^{21}$ cm$^{-3}$ when almost all of the free oxygen ions are substituted for by electrons.

On the other hand, according to the above described conventional method 2, an electrical conductive mayenite compound with a high electron density more than $1 \times 10^{21}$ cm$^{-3}$ can be obtained. However, it is necessary to heat the mayenite compound while contacting with aluminum. The present inventors have found the following problem for this case.

As the melting point of aluminum is 660 °C, if the mayenite compound and aluminum are heated at a temperature higher or equal to the melting point, liquid aluminum is formed at a surface of the mayenite compound. When the temperature is lowered to room temperature under this state, aluminum solid body is adhered to the surface of the electrical conductive mayenite compound. Such an adhered body strongly bonds to the electrical conductive mayenite compound and it is not easy to peel or remove the adhered body. Thus, if such a phenomenon occurs, a process step is required, which lacks productivity.

On the other hand, even when the mayenite compound is heated under aluminum vapor atmosphere without contacting the aluminum solid body, the electrical conductive mayenite compound with a high electron density cannot be obtained within realistic time.

When the mayenite compound is heated under aluminum vapor atmosphere, an oxide insulating layer including calcium aluminate ($CaO \cdot Al_2O_3$, for example) is formed at a surface of the mayenite compound. Such an insulating layer blocks diffusion of the aluminum vapor into the mayenite compound. Thus, if the mayenite compound is heated under aluminum vapor atmosphere without contacting the aluminum solid body, reduction reaction of the mayenite compound is extremely lowered and extremely long time heat treatment is necessary to increase the electron density.

The present invention is made in light of the above problems, and provides a method of effectively manufacturing an electrical conductive mayenite compound with a high electron density.

According to the present invention, there is provided a method of manufacturing a high electrical conductive mayenite compound, including

(1) a step of preparing a mayenite compound powder; and
(2) a step of placing a body to be processed including the compound powder prepared in the step (1) in the presence of carbon monoxide gas and aluminum source supplied from an aluminum vapor without contacting the aluminum source, and holding the body to be processed at a temperature range of 1230 °C to 1415 °C under reducing atmosphere.

Here, according to the manufacturing method of the present invention, the step (2) may be performed under a state where the body to be processed and the aluminum source are put in a container containing carbon.

Further, in the manufacturing method of the present invention, the high electrical conductive mayenite compound having an aluminum carbide layer at a surface may be obtained by the step (2).

Further, according to the manufacturing method of the present invention, the body to be processed including the mayenite compound powder may be a compact body including the mayenite compound powder.

Further, according to the manufacturing method of the present invention, the step (2) may be performed under a reduced pressure environment less than or equal to 100 Pa, or under inert-gas, except nitrogen, atmosphere.

Further, according to the manufacturing method of the present invention, the high electrical conductive mayenite compound whose electron density is more than or equal to $3 \times 10^{20}$ cm$^{-3}$ may be obtained.

According to the present invention, a method of effectively manufacturing an electrical conductive mayenite compound with a high electron density is provided.

Fig. 1 is a flowchart schematically illustrating an example of a method of manufacturing a high electrical conductive mayenite compound according to the present invention;
Fig. 2 is a view schematically illustrating an example of a structure of an apparatus that is used when performing a high temperature treatment on a body to be processed;
Fig. 3 is a view schematically illustrating a structure of an apparatus that is used when performing a high temperature treatment on a compact body SC1 of an example 11.

In the application, a "mayenite compound" is a generic name of $12CaO \cdot 7Al_2O_3$ (hereinafter, referred to as "C12A7") having a cage structure.

Further, in the application, an "electrical conductive mayenite compound" expresses a mayenite compound in which a part of or all of the "free oxygen ions" included in the cages are substituted for by electrons and having an electron density of more than or equal to $1.0 \times 10^{18}$ cm$^{-3}$. The electron density is $2.3 \times 10^{21}$ cm$^{-3}$ when all of the free oxygen ions are substituted for by electrons.

Thus, the "mayenite compound" includes the "electrical conductive mayenite compound" and a "non-electrical conductive mayenite compound".

Hereinafter, in the application, the electrical conductive mayenite compound having an electron density more than or equal to $3.0 \times 10^{20}$ cm$^{-3}$ is specifically referred to as a "high electrical conductive mayenite compound".

Here, generally, the electron density of the electrical conductive mayenite compound is measured by one of two methods based on the electron density of the mayenite compound. When the electron density is $1.0 \times 10^{18}$ cm$^{-3}$ to less than $3.0 \times 10^{20}$ cm$^{-3}$, diffuse reflection of the electrical conductive mayenite compound powder is measured, the diffuse reflection is performed with Kubelka-Munk transformation to obtain absorption spectra, and the electron density is calculated from the absorbance (Kubelka-Munk transformation value) at 2.8 eV (wavelength 443 nm) of the obtained absorption spectra. This method is based on a fact that the electron density and the Kubelka-Munk transformation value have a linear relationship. Hereinafter, a method of creating a calibration curve is explained.

First, four samples having different electron densities are prepared and electron densities of the four samples are obtained from signal strengths of electron spin resonance (ESR). The electron density capable of being measured by ESR is about $1.0 \times 10^{14}$ cm$^{-3}$ to $1.0 \times 10^{19}$ cm$^{-3}$. Logarithms of the Kubelka-Munk values and electron densities obtained by ESR are plotted to obtain a linear relationship and the obtained linear line was used as the calibration curve.

It means that in this method, when the electron density is $1.0 \times 10^{19}$ cm$^{-3}$ to $3.0 \times 10^{20}$ cm$^{-3}$, the calibration curve is obtained by extrapolation.

When the electron density is $3.0 \times 10^{20}$ cm$^{-3}$ to $2.3 \times 10^{21}$ cm$^{-3}$, diffuse reflection of the electrical conductive mayenite compound powder is measured, the diffuse reflection is processed with Kubelka-Munk transformation to obtain absorption spectra, and the electron density is obtained by a conversion using a wavelength (energy) of a peak of the absorption spectra. The following relationship was used.

$$n = (-(E_{sp} - 2.83) / 0.199)^{0.782}$$

Here, "n" indicates the electron density (cm$^{-3}$), and "$E_{sp}$" indicates energy (eV) of the peak of the absorption spectra obtained by Kubelka-Munk transformation.

Further, in the application, for the electrical conductive mayenite compound, a part of at least one kind of atom selected from calcium (Ca), aluminum (Al) and oxygen (O) may be substituted for by another atom or an atom group as long as the electrical conductive mayenite compound has a C12A7 crystalline structure composed of calcium (Ca), aluminum (Al) and oxygen (O). For example, a part of calcium (Ca) may be substituted for by one or more atom(s) selected from a group consisting of magnesium (Mg), strontium (Sr), barium (Ba), lithium (Li), sodium (Na), chrome (Cr), manganese (Mn), cerium (Ce), cobalt (Co), nickel (Ni) and copper (Cu). Further, a part of aluminum (Al) may be substituted for by one or more atom(s) selected from a group consisting of silicon (Si), germanium (Ge), boron (B), gallium (Ga), titanium (Ti), manganese (Mn), iron (Fe), cerium (Ce), praseodymium (Pr), scandium (Sc), lanthanum (La), yttrium (Y), europium (Eu), ytterbium (Yb), cobalt (Co), nickel (Ni) and terbium (Tb). Further, the oxygen of the skeletal structure of the cages may be substituted for by nitrogen (N) or the like.

In the present invention, when manufacturing the electrical conductive mayenite compound, the high electrical conductive mayenite compound can be obtained by placing the mayenite compound, which is the body to be processed, under carbon monoxide gas and aluminum vapor within a temperature range of 1230 °C to 1415 °C without contacting the aluminum source.

According to the manufacturing method of the present invention, by presenting carbon monoxide gas and aluminum vapor in an environment where the mayenite compound is placed, aluminum carbide is mainly formed at a surface of the mayenite compound. As aluminum carbide has a low affinity with the mayenite compound, which is oxide, the aluminum carbide does not adhere to the mayenite compound. Further, as the melting point of aluminum carbide is higher than that of the mayenite compound, aluminum carbide is not sintered. Thus, the surface of the mayenite compound is always kept being exposed to aluminum vapor and the free oxygen in the cages of the mayenite compound is at a state capable of being continuously-extracted. Therefore, it is possible to obtain the high electrical conductive mayenite compound with a sufficiently high electron density within a short period.

(Method of manufacturing high electrical conductive mayenite compound)

The manufacturing method of the present invention is explained in detail with reference to drawings.

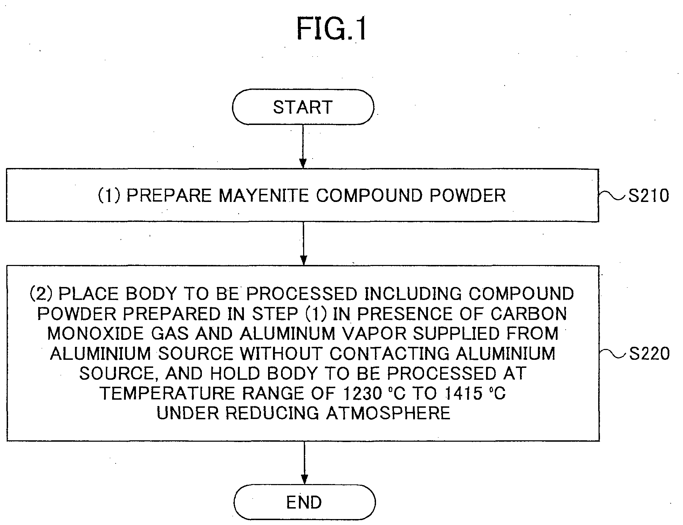

Fig. 1 illustrates a method of manufacturing the high electrical conductive mayenite compound of the present invention.

As illustrated in Fig. 1, the method of the present invention includes,

(1) a step of preparing a mayenite compound powder (step S210), and

(2) a step of placing a body to be processed including the compound powder prepared in the step (1) in the presence of carbon monoxide gas and aluminum vapor supplied from an aluminum source without contacting the aluminum source, and holding the body to be processed at a temperature range of 1230 °C to 1415 °C under reducing atmosphere (step S220).

Hereinafter, each of the steps is explained. (Step S210: Preparing step of mayenite compound powder)

First, the mayenite compound powder is prepared. The mayenite compound powder is synthesized and manufactured by heating a raw material powder at a high temperature as follows.

First, a raw material powder for synthesizing the mayenite compound powder is prepared.

The raw material powder is prepared such that the ratio of calcium (Ca) and aluminum (Al) becomes 12.6: 6.4 to 11.7: 7.3 based on molar ratio as converted to CaO: Al$_2$O$_3$. It is preferable that CaO: Al$_2$O$_3$ (molar ratio) is about 12: 7.

Here, the compound used for the raw material powder is not specifically limited as long as the ratio is held.

It is preferable that the raw material powder includes calcium aluminate, or, at least two compounds selected from a group consisting of a calcium compound, an aluminum compound and calcium aluminate. The raw material powder may be, for example, a mixed powder including a calcium compound and an aluminum compound. The raw material powder may be, for example, a mixed powder including a calcium compound and calcium aluminate. Further, the raw material powder may be, for example, a mixed powder including an aluminum compound and calcium aluminate. Further, the raw material powder may be, for example, a mixed powder including a calcium compound, an aluminum compound and calcium aluminate. Further, the raw material powder may be, for example, a mixed powder including only calcium aluminate.

For the calcium compound, calcium carbonate, calcium oxide, calcium hydroxide, calcium hydrogencarbonate, calcium sulfate, calcium metaphosphate, calcium oxalate, calcium acetate, calcium nitrate, calcium halide or the like may be used. Among these, calcium carbonate, calcium oxide, and calcium hydroxide are preferably used.

For the aluminum compound, aluminum hydroxide, aluminum oxide, aluminum sulfate, aluminum nitrate, aluminum halide or the like may be used. Among these, aluminum hydroxide and aluminum oxide are preferably used.

Next, the prepared raw material powder is held at a high temperature and the mayenite compound is synthesized. The synthesizing may be performed under inert-gas atmosphere or under vacuum; however, it is preferable to be performed under air.

The synthesizing temperature is not specifically limited; but, for example, is preferably within a range of 1200 °C to 1415 °C, more preferably, within a range of 1250 °C to 1400 °C, and furthermore preferably within a range of 1300 °C to 1350 °C. When it is synthesized within a temperature range of 1200 °C to 1415 °C, the mayenite compound including a large amount of a C12A7 crystalline structure can be easily obtained. When the synthesizing temperature is too low, there is a possibility that the amount of the C12A7 crystalline structure becomes small. On the other hand, when the synthesizing temperature is too high to exceed the melting point of the mayenite compound, there is a possibility that the amount of the C12A7 crystalline structure becomes small.

The high temperature holding time is not specifically limited, and this varies in accordance with a synthesizing amount, holding temperature or the like. The holding time is, for example, 1 hour to 12 hours. The holding time is, for example, preferably, 2 hours to 10 hours, and more preferably, 4 hours to 8 hours. By holding the raw material powder at a high temperature for more than or equal to 2 hours, a solid phase reaction proceeds sufficiently to obtain a uniform mayenite compound.

The mayenite compound obtained by the synthesizing has a blocklike structure in which a part or all is sintered. The blocklike mayenite compound is processed with a milling process by a stamping mill or the like, for example, to be a size about 5 mm. Further, the mayenite compound may be processed with a milling process by an automatic mortar or a dry ball mill to form particles having an average particle size of about 10 $\mu$m to 100 $\mu$m. Here, the "average particle size" means a value obtained by a measurement using a laser diffraction/scattering method. Hereinafter, the average particle size of the powder means the measured value by a similar method.

When further fine and uniform particles are to be obtained, for example, the average particle size of the powder can be refined to 0.5 $\mu$m to 50 $\mu$m by using a wet ball mill in which alcohol (for example, isopropyl alcohol) expressed as $C_nH_{2n+1}OH$ ("n" is integer more than or equal to 3) is used as solvent, or a circular bead mill or the like. Water cannot be used as solvent. This is because the mayenite compound is a component of alumina cement and easily reacts with water to generate hydrate.

The mayenite compound powder is prepared by the above step.

The mayenite compound prepared as a powder may be an electrical conductive mayenite compound. This is because the electrical conductive mayenite compound has a better pulverizability than a non-electrical conductive compound. Here, even when the electrical conductive mayenite compound powder is used, there is a case where the compound powder is oxidized to be a non-electrical conductive mayenite compound when preparing the body to be processed (specifically, the compact body) in a subsequent step. The electrical conductive mayenite compound whose electron density is less than $3 \times 10^{20}$ cm$^{-3}$ is preferably prepared.

A synthesizing method of the electrical conductive mayenite compound is not specifically limited, but the following methods may be used. For example, a method of manufacturing by putting a mayenite compound in a carbon container with a cover and performing a heat treatment at 1600 °C (WO 2005/000741), a method of manufacturing by putting a mayenite compound in a carbon container with a cover and performing a heat treatment at 1300 °C in nitrogen (WO 2006/129674), a method of manufacturing by putting a powder such as calcium aluminate or the like made from a calcium carbonate powder and an aluminum oxide powder in a carbon crucible with a cover and performing a heat treatment at 1300 °C in nitrogen (WO 2010/041558), a method of manufacturing a powder obtained by mixing a calcium carbonate powder and an aluminum oxide powder in a carbon crucible with a cover and performing a heat treatment at 1300 °C in nitrogen (Japanese Laid-open Patent Publication 2010-132467) or the like may be used.

A method of grinding the electrical conductive mayenite compound is similar to the method of grinding the mayenite compound.

With the above step, the electrical conductive mayenite compound powder is prepared. Here, a mixed powder of the mayenite compound and the electrical conductive mayenite compound may be used.

(Step S220: Sintering step)

Next, as is explained as follows, by holding the body to be processed including the obtained mayenite compound powder at a high temperature, the high electrical conductive mayenite compound is manufactured as oxygen ions in the cages of the mayenite compound are substituted for by electrons as well as the mayenite compound powder is sintered.
For the body to be processed including the mayenite compound powder, the powder prepared in step S210 may be used as it is. However, in general, a compact body including the mayenite compound powder prepared in step S210 is used as the body to be processed.
A method of forming the compact body is not specifically limited and various known methods may be used to form the compact body. For example, the compact body may be prepared by pressure molding of a molding material that is the powder prepared in step S210 or a kneaded body including the powder.
The molding material includes binder, lubricant, plasticizer or solvent, in accordance with necessity. As the binder, for example, polystyrene, polyethylene, polyvinyl butyral, EVA (ethene vinyl acetate) resin, EEA (ethene ethyl acrylate) resin, acrylic resin, cellulosic resin (nitrocellulose, ethyl cellulose), polyethylene oxide, or the like may be used. As the lubricant, wax or stearic acid may be used. As the plasticizer, phthalic acid ester may be used. As the solvent, aromatic compounds such as toluene, xylene or the like, butyl acetate, terpineol, butyl carbitol acetate, alcohol expressed by a chemical formula $C_nH_{2n+1}OH$ (n = 1 to 4) (isopropyl alcohol, for example), or the like may be used. If water is used as the solvent, there is a possibility that stable slurry cannot be obtained as the mayenite compound causes a chemical reaction by hydration. Alcohol of n = 1, 2 (ethanol, for example) has also a tendency to cause hydration, so that alcohol of n = 3, 4 is preferable.
By sheet forming, extrusion molding, or injection molding of the molding material, a compact body can be obtained. The injection molding, by which near net shape manufacturing is possible, in other words, a shape closer to a final product can be productivity manufactured, is preferable.
In the injection molding, a compact body with a desired shape can be obtained by preparing a molding material by previously performing a heat kneading of the mayenite compound and the binder, and inputting the molding material to an injection molding device. For example, by heat kneading the mayenite compound with the binder and cooling it, pellet or powder molding material having a size about 1 to 10 mm is obtained. In the heat kneading, a labo plastomill or the like is used, aggregation of the powder is released by shear stress and the binder is coated on primary particles of the powder. The molding material is input to the injection molding device and heated to 120 to 250 °C to have the binder express fluidity. A compact body with a desired shape can be obtained by previously heating the mold to 50 to 80 °C and inputting the material to the mold at a pressure of 3 to 10 MPa.
Alternatively, a compact body with a desired shape may be formed by inputting the above described prepared powder or the kneaded body to the mold, and pressing the mold. For pressing the mold, for example, a cold isostatic pressing (CIP) process may be used. The pressure at the CIP process is not specifically limited, but for example, within a range of 50 to 200 MPa.
Further, when the compact body is prepared and the compact body includes the solvent, the compact body may be previously held at a temperature range of 50 °C to 200 °C for about 20 minutes to 2 hours to vaporize and remove the solvent. Further, when the compact body includes the binder, it is preferable to previously retain the compact body at a temperature range of 200 to 800 °C for about 30 minutes to 6 hours, or increase the temperature for 50 °C/hour to remove the binder. Alternatively, both of the processes may be performed at the same time.
Next, the body to be processed is treated with a high temperature treatment under a reducing atmosphere. With this, calcium oxide and aluminum oxide in the calcinated powder react with each other to generate the mayenite compound, and the mayenite compound is reduced to form the electrical conductive mayenite compound.
Here, as described above, in the present invention, the body to be processed is placed in the presence of the carbon monoxide gas and aluminum vapor supplied from the aluminum vapor source.
The high temperature treatment of the body to be processed is performed under reducing atmosphere. The "reducing atmosphere" is a generic name of atmosphere in which the partial pressure of oxygen in the environment is less than or equal to $10^{-3}$ Pa, and the environment may be inert-gas atmosphere, or reduced pressure environment (vacuum environment whose pressure is less than or equal to 100 Pa, for example). The partial pressure of oxygen is, preferably, less than or equal to $10^{-5}$ Pa, more preferably, less than or equal to $10^{-10}$ Pa, and furthermore preferably, less than or equal to $10^{-15}$ Pa.
The aluminum vapor source is not specifically limited, but may be, for example, an aluminum particle layer. Further, the aluminum vapor source may be aluminum which is a part of a composite material such as, AlSiC (composite of aluminum and silicon carbide). Here, as described above, it should be noted that the body to be processed is placed in the presence of aluminum vapor without directly contacting the aluminum vapor source.
The carbon monoxide gas may be provided from outside to the environment where the body to be processed is placed, but it is preferable to place the body to be processed in a container containing carbon. A carbon container may be used or a carbon sheet may be placed in the environment.

The heat treatment may be performed at a state where the body to be processed and the aluminum layer are placed in a carbon container with a cover in order to supply carbon monoxide gas and aluminum vapor, for example. Here, it is preferable that the aluminum vapor source and the carbon container do not directly contact each other. This is because if both materials are held at a high temperature while contacting each other, both the materials react with each other at a contacting portion, and it becomes difficult to supply a sufficient amount of aluminum vapor and carbon monoxide gas to the reaction environment. The aluminum vapor source and the carbon container may be separated by a separator made of such as alumina or the like.

A method of adjusting the reaction environment to reducing atmosphere when performing the high temperature treatment on the body to be processed is not specifically limited.

For example, the container containing carbon may be placed at vacuum atmosphere whose pressure is less than or equal to 100 Pa. In this case, the temperature is, preferably, less than or equal to 60 Pa, more preferably, less than or equal to 40 Pa, and furthermore preferably, less than or equal to 20 Pa.

Alternatively, inert-gas atmosphere (however, except nitrogen gas) in which partial pressure of oxygen is less than or equal to 1000 Pa may be supplied to the container containing carbon. At this time, the partial pressure of oxygen in the supplied inert-gas atmosphere is, preferably, less than or equal to 100 Pa, more preferably, less than or equal to 10 Pa, furthermore preferably, less than or equal to 1 Pa, and in particularly preferably, less than or equal to 0.1 Pa.

The inert-gas atmosphere may be an argon gas atmosphere or the like. However, it is not preferable to use nitrogen gas as the inert-gas in the present invention. Nitrogen gas reacts with aluminum vapor that exists in the reaction environment in the invention to generate aluminum nitride. Thus, if aluminum nitride is generated, aluminum vapor necessary for reducing the mayenite compound is hardly supplied.

The process temperature is within a range of 1230 °C to 14.15 °C, specifically, preferably, within a range of 1250 °C to 1370 °C, and preferably within a range of 1250 °C to 1320 °C. If the process temperature is less than 1230 °C, there is a possibility that the sufficient electrical conductivity is not given to the mayenite compound. Further, if the process temperature is more than 1415 °C, which exceeds the melting point of the mayenite compound, the crystalline structure decomposes to lower the electron density. It is preferable to perform the heat treatment at less than or equal to 1370 °C in order to obtain an electrical conductive mayenite compound with a desired shape. Further, it is more preferable to perform the heat treatment at less than or equal to 1320 °C so that a phenomenon that the surface aluminum carbide layer becomes too thick can be suppressed.

The high temperature holding time for the body to be processed is, preferably, within a range of 5 minutes to 48 hours, more preferably, within a range of 30 minutes to 24 hours, furthermore preferably, within a range of 1 hour to 12 hours, and at most preferably, 2 hours to 8 hours. When the holding time for the body to be processed is less than 5 minutes, there is a possibility that the electrical conductive mayenite compound with a sufficient high electron density cannot be obtained and sintering is not sufficient so that the obtained sintered body may easily broken. Further, even when the holding time becomes longer, there is no problem in its characteristics; however, it is preferable that the holding time is less than or equal to 24 hours so that a desired shape of the mayenite compound can be easily held. Further, it is more preferable that the holding time is less than or equal to 12 hours so that a phenomenon that the surface aluminum carbide layer becomes too thick can be suppressed.

When aluminum carbide is generated, different from a general oxide layer, it can be easily removed from the surface of the electrical conductive mayenite compound just by slightly rubbing. Thus, when aluminum and carbon monoxide are used, a new surface of the obtained high electrical conductive mayenite compound can be easily exposed. At this time, the obtained high electrical conductive mayenite compound can be used as the electrode material almost as it is.

With the above step, the high electrical conductive mayenite compound whose electron density is more than or equal to $3.0 \times 10^{20}$ cm$^{-3}$ can be obtained.

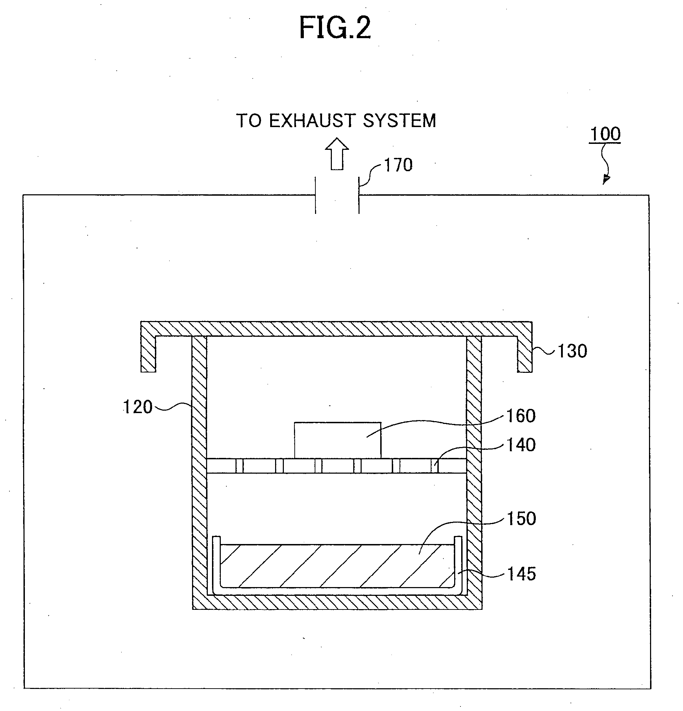

Fig. 2 is a view schematically illustrating an example of an apparatus that is used when performing a high temperature treatment on the body to be processed.

The entirety of an apparatus 100 is configured with a heat-resisting closed container, and an exhaust port 170 is connected to an exhaust system.

The apparatus 100 includes a carbon container 120 whose upper portion is opened, a carbon cover 130 placed on an upper portion of the carbon container 120, and a partition plate 140 placed in the carbon container 120, in the heat-resisting closed container. A metal aluminum powder layer 150 is placed on a heat-resisting tray (an alumina tray, for example) 145 that is mounted at a bottom portion of the carbon container 120, as an aluminum vapor source.

A body to be processed 160 is placed on an upper portion of the partition plate 140. The partition plate 140 has a structure that the aluminum vapor from the layer 150 can reach the body to be processed 160. Further, it is necessary to form the partition plate 140 with a material that does not react with aluminum vapor or the body to be processed 160 when performing the high temperature treatment. For example, the partition plate 140 is an alumina plate provided with a lot of through-holes.

The carbon container 120 and the carbon cover 130 function as a supply source of carbon monoxide gas when performing the high temperature treatment on the body to be processed 160. It means that when the body to be processed 160 is held at a high temperature, carbon monoxide gas is generated from the carbon container 120 and the carbon cover 130.

Here, the apparatus structure illustrated in Fig. 2 is just an example, and it should be apparent for those skilled in the art to perform a high temperature treatment on the body to be processed using other apparatuses.

[Example]

Next, examples are explained.

(Example 11)

The high electrical conductive mayenite compound was manufactured by the following method.

(Syntheses of mayenite compound)

313.5 g of a calcium carbonate ($CaCO_3$) powder and 186.5 g of an aluminum oxide ($Al_2O_3$) powder were mixed such that calcium oxide (CaO): aluminum oxide ($Al_2O_3$) became 12 : 7 by molar ratio conversion. Next, the mixed powder was heated to 1350 °C at a temperature rising rate of 300 °C/hour in air and held at 1350 °C for 6 hours. Thereafter, the mixed powder was cooled at a cooling rate of 300 °C/hour to obtain about 362 g of a white block body.

Next, after grinding the white block body by an alumina stamping mill to obtain a fragment having a size about 5 mm, further, the fragment was processed with rough milling by an alumina automatic mortar mill to obtain white particles (hereinafter, referred to as a particle "SA1"). By measuring the granularity of the obtained particles SA1 by a laser diffraction/scattering method (SALD-2100, manufactured by Shimadzu Corporation), the average particle size was 20 $\mu$m.

Next, 350 g of the particles SA1, 3 kg of zirconia balls having a diameter of 5 mm, and 350 ml of industrial EL grade isopropyl alcohol as a milling solvent were put in a 2 liter zirconia container, and milled with a ball mill milling process at a rotation speed of 94 rpm for 16 hours after placing a zirconia cover on the container.

After the process, the obtained slurry was filtered under suction to remove the milling solvent. Further, the remaining material was put into an oven at 80 °C and dried for 10 hours. With this, a white powder (hereinafter, referred to as a powder "SB1") was obtained. As a result of X-ray diffraction analysis, it was confirmed that the obtained powder SB1 had the C12A7 structure. Further, by the above described laser diffraction/scattering method, it was revealed that the average particle size of the obtained powder SB1 was 3.3 $\mu$m.

(Manufacturing compact body of mayenite compound)

The powder SB1 (13 g) obtained by the above described method was spread in a mold having a length 40 mm $\times$ a width 20 mm $\times$ a height 30 mm. The molding was performed with a uni-axial press at a pressure of 10 MPa for 1 minute. Further, the molding was performed with a cold isostatic pressing at a pressure of 180 MPa to obtain a compact body SC1 having a size of a length about 40 mm $\times$ a width about 20 mm $\times$ a height about 10 mm.

(Manufacturing high electrical conductive mayenite compound)

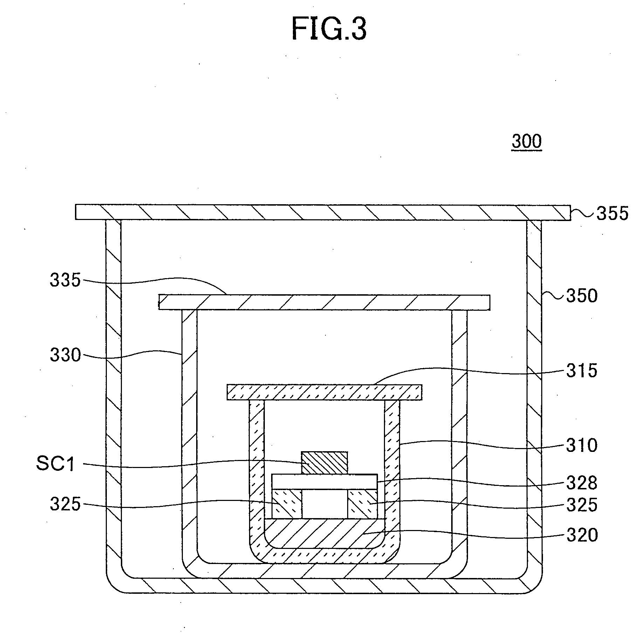

Next, the compact body SC1 was sintered with a sintering process at a high temperature to manufacture the electrical conductive mayenite compound using the apparatus illustrated in Fig. 3.

Fig. 3 illustrates an apparatus that was used for a sintering process of the compact body. As illustrated in Fig. 3, an apparatus 300 includes an alumina container 310 with an alumina cover 315, a first carbon container 330 with a carbon cover 335, and a second carbon container 350 with a carbon cover 355. Further, an aluminum layer 320 configured by spreading 3g of a metal aluminum powder is placed at a bottom surface of the alumina container 310. The aluminum layer 320 functions as the aluminum vapor source that generates aluminum vapor when the apparatus 300 is heated at a high temperature.

The alumina container 310 has a substantially cylindrical shape whose external diameter is 40 mm $\times$ internal diameter is 38 mm $\times$ height is 40 mm. Further, the first carbon container 330 has a substantially cylindrical shape whose external diameter is 60 mm $\times$ internal diameter is 50 mm $\times$ height is 60 mm. The second carbon container 350 has a substantially cylindrical shape whose external diameter is 80 mm $\times$ internal diameter is 70 mm $\times$ height is 75 mm.

In this example 11, the above described apparatus 300 was used as follows.

First, the above described compact body SC1 was cut by a commercially available cutter to a rectangular shape with length of 8 mm $\times$ width of 6 mm $\times$ thickness of 6 mm.

Next, the compact body SC1 was placed in the alumina container 310. At this time, two of the alumina blocks 325 having the same shape were placed on the aluminum layer 320, and the alumina plate 328 whose thickness was 1 mm was further placed on the alumina blocks 325. After placing the compact body SC1 on the alumina plate 328, the cover 315 was placed on the alumina container 310. Under this state, the compact body SC1 did not directly contact the aluminum layer 320.

Next, the apparatus 300 was placed in an atmosphere adjustable electric furnace. Further, the furnace was evacuated by a rotary pump. Thereafter, after the pressure in the furnace became less than or equal to 5 Pa, the apparatus 300 was started to be heated to 1250 °C at a temperature rising rate of 300 °C/hour. After holding the apparatus 300 for 6 hours under this state, the apparatus 300 was cooled to room temperature at a temperature decreasing rate of 300 °C/hour.

Here, the partial pressure of oxygen thermodynamically calculated from the equilibrium constant of the oxidation-reduction reaction of aluminum and carbon at 1300 °C was $1.6 \times 10^{-20}$ Pa. Thus, it is estimated that the partial pressure of oxygen in the environment in which the compact body SC1 was exposed at 1250 °C was less than $1.6 \times 10^{-20}$ Pa by calculation.

With this process, the compact body SC1 was sintered and a black material whose surface was slightly white (hereinafter, referred to as a black material "SD1") was obtained. The relative density of the black material SD1 was 97.0%.

In order to obtain a measurement sample for electron density, the black material SD1 was milled with rough milling by an alumina automatic mortar mill. First, the black material SD1 was grinded by the alumina mortar mill to carefully remove the slightly white portion at the surface and the rough milling was performed only using the black portion.

The obtained powder was dark brown. As a result of X-ray diffraction analysis, it was revealed that the powder only included the C12A7 structure. Further, the electron density obtained from a peak position of the light diffusion reflection spectrum of the obtained powder was $1.6 \times 10^{21}$ cm$^{-3}$ and the electrical conductivity of which was 17 S/cm. With this, it was confirmed that the black material SD1 was the high electrical conductive mayenite compound.

(Example 12)

Similar to the method of the above described example 11, the electrical conductive mayenite compound was manufactured. However, in this example 12, the sintering temperature was 1300 °C in the above described step (manufacturing the high electrical conductive mayenite compound). Other conditions were similar to those of the example 11.

Here, the partial pressure of oxygen thermodynamically calculated from the equilibrium constant of the oxidation-reduction reaction of aluminum and carbon at 1300 °C is $1.6 \times 10^{-20}$ Pa. Thus, it is estimated that the partial pressure of oxygen in the environment in which the compact body SC1 was exposed was about $1.6 \times 10^{-20}$ Pa by calculation, in the example 12.

With this, a black material whose surface was pale yellow (hereinafter, referred to as a black material "SD2") was obtained after the above described step (manufacturing the high electrical conductive mayenite compound). The relative density of the black material SD2 was 96.1%. Further, as a result of X-ray diffraction of the powder obtained by grinding the black material SD2 by the method similar to the example 11, it was revealed that the black material SD2 only included the C12A7 structure. The electron density of the black material SD2 was $1.6 \times 10^{21}$ cm$^{-3}$ and the electrical conductivity of which was 17 S/cm.

With this, it was confirmed that the black material SD2 was the high electrical conductive mayenite compound.

(Example 13)

Similar to the method of the above described example 11, the high electrical conductive mayenite compound was manufactured. However, in this example 13, the sintering temperature was 1340 °C in the above described step (manufacturing the high electrical conductive mayenite compound). Other conditions were similar to those of the example 11.

Here, the partial pressure of oxygen thermodynamically calculated from the equilibrium constant of the oxidation-reduction reaction of aluminum and carbon at 1415 °C was $6.2 \times 10^{-18}$ Pa. Thus, it is estimated that the partial pressure of oxygen in the environment in which the compact body SC1 is exposed at 1340 °C was less than $6.2 \times 10^{-18}$ Pa by calculation.

With this, a black material whose surface was covered by a yellow powder (hereinafter, referred to as a black material "SD3") was obtained after the above described step (manufacturing the high electrical conductive mayenite compound). The relative density of the black material SD3 was 95.5%.

Further, as a result of X-ray diffraction of the powder obtained by grinding the black material SD3 by the method similar to the example 11, it was revealed that the black material SD3 only included the C12A7 structure. The electron density of the black material SD3 was $1.5 \times 10^{21}$ cm$^{-3}$ and the electrical conductivity of which was 16 S/cm.

With this, it was confirmed that the black material SD3 was the high electrical conductive mayenite compound.

Here, the yellow powder that covers the surface of the black material SD3 could be easily removed just by slightly rubbing. The surface after removing the yellow powder was black and it was revealed (confirmed by a tester) that the surface black portion has electrical conductivity.

Further, it was confirmed that the main component of the yellow powder was aluminum carbide $Al_4C_3$ by X-ray diffraction analysis of the yellow powder.

(Example 14)

Similar to the method of the above described example 11, the high electrical conductive mayenite compound was manufactured. However, in this example 14, the sintering temperature was 1300 °C and the holding time was 12 hours in the above described step (manufacturing the high electrical conductive mayenite compound). Other conditions were similar to those of the example 11.

Here, the partial pressure of oxygen thermodynamically calculated from the equilibrium constant of the oxidation-reduction reaction of aluminum and carbon at 1300 °C was $1.6 \times 10^{-20}$ Pa. Thus, it is estimated that the partial pressure of oxygen in the environment in which the compact body SC1 was exposed was about $1.6 \times 10^{-20}$ Pa by calculation, in the example 14.

With this, a black material whose surface was covered by a yellow powder (hereinafter, referred to as a black material "SD4") was obtained after the above described step (manufacturing the high electrical conductive mayenite compound). The relative density of the black material SD4 was 96.2%.

Further, as a result of X-ray diffraction of the powder obtained by grinding the black material SD4 by the method similar to the example 11, it was revealed that the black material SD4 only included the C12A7 structure. The electron density of the black material SD4 was $1.5 \times 10^{21}$ cm$^{-3}$ and the electrical conductivity of which was 16 S/cm.

With this, it was confirmed that the black material SD4 was the high electrical conductive mayenite compound.

Here, the yellow powder that covers the surface of the black material SD4 could be easily removed just by slightly rubbing. The surface after removing the yellow powder was black and it was revealed (confirmed by a tester) that the surface black portion has electrical conductivity.

Further, it was confirmed that the main component of the yellow powder was aluminum carbide $Al_4C_3$ by X-ray diffraction analysis of the yellow powder.

(Example 15)

Similar to the method of the above described example 11, the high electrical conductive mayenite compound was manufactured. However, in this example 15, the sintering temperature was 1300 °C and the holding time was 2 hours in the above described step (manufacturing the high electrical conductive mayenite compound). Other conditions were similar to those of the example 11.

Here, the partial pressure of oxygen thermodynamically calculated from the equilibrium constant of the oxidation-reduction reaction of aluminum and carbon at 1300°C was $1.6 \times 10^{-20}$ Pa. Thus, it is estimated that the partial pressure of oxygen in the environment in which the compact body SC1 was exposed was about $1.6 \times 10^{-20}$ Pa by calculation, in the example 15.

With this, a black material whose surface was pale yellow (hereinafter, referred to as a black material "SD5") was obtained after the above described step (manufacturing the high electrical conductive mayenite compound). The relative density of the black material SD5 was 94.1%.

Further, as a result of X-ray diffraction of the powder obtained by grinding the black material SD5 by the method similar to the example 11, it was revealed that the black material SD5 only included the C12A7 structure. The electron density of the black material SD5 was $1.4 \times 10^{21}$ cm$^{-3}$ and the electrical conductivity of which was 15 S/cm.

With this, it was confirmed that the black material SD5 was the high electrical conductive mayenite compound.

(Example 16)

Similar to the method of the above described example 11, the sintered body of the high electrical conductive mayenite compound was manufactured. However, in this example 16, the sintering temperature was 1380 °C and the holding time was 12 hours in the above described step (manufacturing the high electrical conductive mayenite compound). Other conditions were similar to those of the example 11.

Here, the partial pressure of oxygen thermodynamically calculated from the equilibrium constant of the oxidation-reduction reaction of aluminum and carbon at 1415 °C was $6.2 \times 10^{-18}$ Pa. Thus, it is estimated that the partial pressure of oxygen in the environment in which the compact body SC1 was exposed was about $6.2 \times 10^{-18}$ Pa by calculation, in the example 16.

With this, a black material whose surface was slightly white (hereinafter, referred to as a black material "SD6") was obtained after the above described step (manufacturing the high electrical conductive mayenite compound). The black material (hereinafter, referred to as a black material "SD6") was obtained. Here, the shape of the black material SD6 was largely deformed.

Further, as a result of X-ray diffraction of the powder obtained by grinding the black material SD6 by the method similar to the example 11, it was revealed that the black material SD6 only included the C12A7 structure. The electron density of the black material SD6 was $1.0 \times 10^{21}$ cm$^{-3}$ and the electrical conductivity of which was 13 S/cm.

With this, it was confirmed that the black material SD6 was the high electrical conductive mayenite compound.

(Example 17)

Similar to the method of the above described example 11, the high electrical conductive mayenite compound was manufactured. However, in this example 17, an aluminum layer that was used in the same condition as the example 11 was used as the aluminum layer 320 in the above described step (manufacturing the high electrical conductive mayenite compound). It means that the aluminum layer 320 was in a blocklike form in this example 17 as the metal aluminum powder composing the aluminum layer 320 was melted and solidified by the previous heat treatment. Other conditions were similar to those of the example 11.

Here, the partial pressure of oxygen thermodynamically calculated from the equilibrium constant of the oxidation-reduction reaction of aluminum and carbon at 1300 °C was $1.6 \times 10^{-20}$ Pa. Thus, it is estimated that the partial pressure of oxygen in the environment in which the compact body SC1 was exposed at 1250 °C was less than $1.6 \times 10^{-20}$ Pa.

With this, a black material whose surface was slightly white (hereinafter, referred to as a black material "SD7") was obtained after the above described step (manufacturing the high electrical conductive mayenite compound). The relative density of the black material SD7 was 97.2%.

Further, as a result of X-ray diffraction of the powder obtained by grinding the black material SD7 by the method similar to the example 11, it was revealed that the black material SD7 only included the C12A7 structure. The electron density of the black material SD7 was $1.6 \times 10^{21}$ cm$^{-3}$ and the electrical conductivity was 17 S/cm.

With this, it was confirmed that the black material SD7 was the high electrical conductive mayenite compound.

Further, from this result, it was revealed that the aluminum layer 320 can be recycled. Further, it was confirmed in a subsequent experiment that almost the same high electrical conductive mayenite compound could be obtained even when the aluminum layer 320 was recycled for 10 times in the apparatus 300.

(Example 18)

Similar to the method of the above described example 11, the high electrical conductive mayenite compound was manufactured. However, in this example 18, the electrical conductive mayenite compound powder whose electron density was $5.0 \times 10^{19}$ cm$^{-3}$ was used, instead of the mayenite compound, as the powder used in the above described step (manufacturing the compact body of the mayenite compound). Other conditions were similar to those of the example 11.

Here, the partial pressure of oxygen thermodynamically calculated from the equilibrium constant of the oxidation-reduction reaction of aluminum and carbon at 1300 °C was $1.6 \times 10^{-20}$ Pa. Thus, it is estimated that the partial pressure of oxygen in the environment in which the compact body SC1 was exposed at 1250 °C was less than $1.6 \times 10^{-20}$ Pa by calculation.

With this, a black material whose surface was slightly white (hereinafter, referred to as a black material "SD8") was obtained after the above described step (manufacturing the high electrical conductive mayenite compound). The relative density of the black material SD8 was 96.8%.

Further, as a result of X-ray diffraction of the powder obtained by grinding the black material SD8 by the method similar to the example 11, it was revealed that the black material SD8 only included the C12A7 structure. The electron density of the black material SD8 was $1.6 \times 10^{21}$ cm$^{-3}$ and the electrical conductivity of which was 17 S/cm.

With this, it was confirmed that the black material SD8 was the high electrical conductive mayenite compound.

(Example 19)

Similar to the method of the above described example 11, the high electrical conductive mayenite compound was manufactured. However, in this example 19, only the alumina container 310 with the cover 315 and the first carbon container 330 with the cover 335 were used and the second carbon container 350 with the cover 355 was not in the used apparatus 300, in the above described step (manufacturing of the high electrical conductive mayenite compound). Other conditions were similar to those of the example 11.

Here, the partial pressure of oxygen thermodynamically calculated from the equilibrium constant of the oxidation-reduction reaction of aluminum and carbon at 1300 °C was $1.6 \times 10^{-20}$ Pa. Thus, it is estimated that the partial pressure of oxygen in the environment in which the compact body SC1 was exposed at 1250 °C was less than $1.6 \times 10^{-20}$ Pa.

With this, a black material whose surface was slightly white (hereinafter, referred to as a black material "SD9") was obtained after the above described step (manufacturing the high electrical conductive mayenite compound). The relative density of the black material SD9 was 96.8%.

Further, as a result of X-ray diffraction of the powder obtained by grinding the black material SD9 by the method similar to the example 11, it was revealed that the black material SD9 only included the C12A7 structure. The electron density of the black material SD9 was $1.4 \times 10^{21}$ cm$^{-3}$ and the electrical conductivity of which was 15 S/cm.

With this, it was confirmed that the black material SD9 is a high electrical conductive mayenite compound.

(Example 20)

Similar to the method of the above described example 11, the high electrical conductive mayenite compound was manufactured. However, in this example 20, the pressure in the electric furnace was 30 Pa in the above described step (manufacturing the high electrical conductive mayenite compound). Other conditions were the same as those of the example 11.

Here, the partial pressure of oxygen thermodynamically calculated from the equilibrium constant of the oxidation-reduction reaction of aluminum and carbon at 1300 °C was $1.6 \times 10^{-20}$ Pa. Thus, it is estimated that the partial pressure of oxygen in the environment in which the compact body SC1 was exposed at 1250 °C was less than $1.6 \times 10^{-20}$ Pa.

With this, a black material whose surface was slightly white (hereinafter, referred to as a black material "SD10") was obtained after the above described step (manufacturing the high electrical conductive mayenite compound). The relative density of the black material SD10 was 96.6%.

Further, as a result of X-ray diffraction of the powder obtained by grinding the black material SD10 by the method similar to the example 11, it was revealed that the black material SD10 only included the C12A7 structure. The electron density of the black material SD10 was $1.4 \times 10^{21}$ cm$^{-3}$ and the electrical conductivity of which was 15 S/cm.

With this, it was confirmed that the black material SD10 was the high electrical conductive mayenite compound.

(Relative example 6)

Similar to the method of the above described example 11, manufacturing the high electrical conductive mayenite compound was attempted. However, in this relative example 6, the sintering temperature was 1200 °C in the above described step (manufacturing the high electrical conductive mayenite compound). Other conditions were similar to those of the example 11.

Here, the partial pressure of oxygen thermodynamically calculated from the equilibrium constant of the oxidation-reduction reaction of aluminum and carbon at 1230 °C was $2.8 \times 10^{-22}$ Pa. Thus, it is estimated that the partial pressure of oxygen in the environment in which the compact body SC1 was exposed at 1200 °C was less than $2.8 \times 10^{-22}$ Pa by calculation.

With this, a black material whose surface was slightly white (hereinafter, referred to as a black material "SD11") was obtained after the above described step (manufacturing the high electrical conductive mayenite compound). The relative density of the black material SD11 was 94.0%.

Further, as a result of X-ray diffraction of the powder obtained by grinding the black material SD11 by the method similar to the example 11, it was revealed that hetero-facies existed in addition to the C12A7 structure in the black material SD11. As the black material SD11 included hetero-facies, accurate electron density and electrical conductivity cannot be obtained, however, the electron density of the black material SD11 was about $3.0 \times 10^{19}$ cm$^{-3}$ and the electrical conductivity of which was 0.2 S/cm.

With this, it was confirmed that the black material SD11 does not have a high electron density.

(Relative example 7)

By a method similar to the above described example 11, manufacturing the high electrical conductive mayenite compound was attempted. However, in this relative example 7, the sintering temperature was 1420 °C in the above described step (manufacturing the high electrical conductive mayenite compound). Other conditions were similar to those of the example 11.

Here, the partial pressure of oxygen thermodynamically calculated from the equilibrium constant of the oxidation-reduction reaction of aluminum and carbon at 1415 °C was $6.2 \times 10^{-18}$ Pa. Thus, it is estimated that the partial pressure of oxygen in the environment in which the compact body SC1 was exposed at 1420 °C exceeded $6.2 \times 10^{-18}$ Pa by calculation.

With this, a black material whose surface was slightly white (hereinafter, referred to as a black material "SD12") was obtained after the above described step (manufacturing the high electrical conductive mayenite compound). The black material SD12 was largely deformed. Further, the black material SD12 was adhered to the alumina plate 328 and was not able to be separated from the alumina plate 328. Thus, the alumina plate 328 was broken and only fragments of the black material were collected. The relative density of the black material SD12 was 93.9%.

In order to obtain a measurement sample for electron density, the black material SD12 was milled with rough milling by an alumina automatic mortar mill. First, the black material SD12 was grinded by the alumina mortar mill to carefully remove the slightly white portion at the surface and the rough milling was performed only using the black portion.

The obtained powder was deep green. As a result of X-ray diffraction analysis, it was revealed that hetero-facies existed, not only the C12A7 structure, in the powder. Here, as there existed hetero-facies, accurate electron density and electrical conductivity was not able to be obtained; however, it was estimated that the electron density of the black material SD12 was about $5.2 \times 10^{19}$ cm$^{-3}$ and the electrical conductivity was 0.4 S/cm.

With this, it was confirmed that the black material SD12 does not have a high electron density.

(Relative example 8)

By a method similar to the above described example 11, manufacturing the high electrical conductive mayenite compound was attempted. However, in this relative example 8, only the alumina container 310 with the cover 315 was used and the first carbon container 330 with the cover 335 and the second carbon container 350 with the cover 355 were not used in the used apparatus 300 in the above described step (manufacturing of the high electrical conductive mayenite compound). Other conditions were similar to those of the example 11.

Here, the partial pressure of oxygen thermodynamically calculated from the equilibrium constant of the oxidation-reduction reaction of aluminum at 1300 °C was $6.4 \times 10^{-22}$ Pa. Thus, it is estimated that the partial pressure of oxygen in the environment in which the compact body SC1 was exposed at 1250 °C was less than $6.4 \times 10^{-22}$ Pa.

With this, a black material whose surface was slightly white (hereinafter, referred to as a black material "SD13") was obtained after the above described step (manufacturing the high electrical conductive mayenite compound). The relative density of the black material SD13 was 93.0%.

Further, as a result of X-ray diffraction of the powder obtained by grinding the black material SD13 by the method similar to the example 11, it was revealed that the black material SD13 only included the C12A7 structure. Further, the electron density obtained from the light diffusion reflection spectrum of the obtained powder by Kubelka-Munk transformation was $1.2 \times 10^{19}$ cm$^{-3}$ and whose electrical conductivity of which was 0.1 S/cm.

With this, it was confirmed that the black material SD13 does not have a high electron density.

(Relative example 9)

By a method similar to the above described example 11, manufacturing the high electrical conductive mayenite compound was attempted. However, in this relative example 9, the alumina block 325 and the alumina plate 328 were not used and the compact body of the mayenite compound was directly provided on the aluminum layer 320 in the used apparatus 300 in the above described step (manufacturing of the high electrical conductive mayenite compound). Other conditions were similar to those of the example 11.

Here, the partial pressure of oxygen thermodynamically calculated from the equilibrium constant of the oxidation-reduction reaction of aluminum and carbon at 1300 °C was $1.6 \times 10^{-20}$ Pa. Thus, it is estimated that the partial pressure of oxygen in the environment in which the compact body SC1 was exposed at 1250 °C was less than $1.6 \times 10^{-20}$ Pa.

With this, a black material (hereinafter, referred to as a black material "SD14") was obtained after the above described step (manufacturing the high electrical conductive mayenite compound). Half of the black material SD14 was sunk in the aluminum layer 320 and was not able to be easily collected.

Thus, the black material SD14 was collected with the aluminum layer 320 by breaking the alumina container 310 by a hammer. To the surface of the black material SD14, a silvery-white fused material of metal aluminum was adhered and a white material, which was considered as alumina, was further strongly adhered. These materials were carefully removed by using a power saw, a ceramics Leutor (grinder) and sandpaper, and then, the relative density and the electron density of the black material SD14 were examined. The relative density of the black material SD14 was 91.4%.

Further, as a result of X-ray diffraction of the powder obtained by grinding the black material SD14 by the method similar to the example 11, it was revealed that the black material SD14 only included the C12A7 structure. The electron density of the black material SD14 was $1.4 \times 10^{21}$ cm$^{-3}$ and the electrical conductivity of which was 15 S/cm. With this, it was confirmed that the black material SD14 was the high electrical conductive mayenite compound.

However, by the relative example 9, it was revealed that a large effort was necessary to collect the electrical conductive mayenite compound. Thus, it is considered that this method does not suit industrial production.

(Relative example 10)

By a method similar to the above described example 11, manufacturing the high electrical conductive mayenite compound was attempted. However, in this relative example 10, the alumina container 310 with the cover 315 and the aluminum layer 320 were not used in the used apparatus 300, in the above described step (manufacturing of the high electrical conductive mayenite compound). It means that in this relative example 10, only the first carbon container 330 with the cover 335 and the second carbon container 350 with the cover 355 were used, and the sintering process of the compact body SC1 was performed under an environment without aluminum vapor.

Further, during the sintering process, first, the furnace was evacuated to be 100 Pa, and then, nitrogen gas, in which the oxygen concentration was less than or equal to 1 volume ppm, was introduced to the furnace to became atmospheric pressure. Thereafter, the second carbon container 350 was heated to 1600 °C within 4 hours, held at the temperature for 2 hours, and then cooled to be room temperature within 4 hours.

Thus, the partial pressure of oxygen in the environment in which the compact body SC1 was exposed was about 0.1 Pa, in this relative example 10.

With this, a black material whose surface was black (hereinafter, referred to as a black material "SD15") was obtained.

The black material SD15 was fused to the first carbon container 330 and was not able to be easily collected. Thus, the first carbon container 330 was broken by a hammer and only scattered fragments of the black material SD15 were collected.

Further, as a result of X-ray diffraction of the powder obtained by grinding the black material SD15 by the method similar to the example 11, it was revealed that the black material SD15 only included the C12A7 structure. However, the electron density of the black material SD15 was $3.4 \times 10^{19}$ cm$^{-3}$.

With this, it was confirmed that the black material SD15 does not have a high electron density.


(Relative example 11)

By a method similar to the above described relative example 10, manufacturing the high electrical conductive mayenite compound was attempted. However, in this relative example 11, a black material SD16 was obtained by heating to 1300 °C within 4 hours, holding at the temperature for 6 hours, and then cooling to be room temperature within 4 hours. The black material SD16 was not adhered to the carbon container and could be easily collected.

Further, as a result of X-ray diffraction of the powder obtained by grinding the black material SD16 by the method similar to the example 11, it was revealed that the black material SD16 only included the C12A7 structure. However, the electron density of the black material SD16 was $4.8 \times 10^{19}$ cm$^{-3}$.

With this, it was confirmed that the black material SD16 does not have a high electron density.

The sintering temperature, time, and whether aluminum vapor was used for the compact body, and the crystalline structure, the relative density, the electron density, and the electrical conductivity of the obtained black material, of the examples 11 to 20 and the relative examples 6 to 11 are illustrated in Table 1.

[Table 1]

| | SINTERING TEMPERATURE (°C) | TIME (H) | Al VAPOR | OTHERS | CRYSTAL-LINE STRUC-TURE | RELATIVE DENSITY (%) | ELECTRON DENSITY ($cm^{-3}$) | ELECTRICAL CONDUCTIV-ITY (S/cm) |
|---|---|---|---|---|---|---|---|---|
| EXAMPLE 11 | 1250 | 6 | WITH | | C12A7 | 97.0 | $1.6 \times 10^{21}$ | 17 |
| EXAMPLE 12 | 1300 | 6 | WITH | | C12A7 | 96.1 | $1.6 \times 10^{21}$ | 17 |
| EXAMPLE 13 | 1340 | 6 | WITH | | C12A7 | 95.5 | $1.5 \times 10^{21}$ | 16 |
| EXAMPLE 14 | 1300 | 12 | WITH | | C12A7 | 96.2 | $1.5 \times 10^{21}$ | 16 |
| EXAMPLE 15 | 1300 | 2 | WITH | | C12A7 | 94.1 | $1.4 \times 10^{21}$ | 15 |
| EXAMPLE 16 | 1380 | 12 | WITH | | C12A7 | - | $1.0 \times 10^{21}$ | 13 |
| EXAMPLE 17 | 1250 | 6 | WITH | ALUMINIUM LAYER IS RECYCLED | C12A7 | 97.2 | $1.6 \times 10^{21}$ | 17 |
| EXAMPLE 18 | 1250 | 6 | WITH | ELECTRICAL CONDUCTIVE MAYENITE COMPOUND POWDER WAS USED | C12A7 | 96.8 | $1.6 \times 10^{21}$ | 17 |
| EXAMPLE 19 | 1250 | 6 | WITH | SECOND CARBON CONTAINER WAS NOT USED | C12A7 | 96.8 | $1.4 \times 10^{21}$ | 15 |
| EXAMPLE 20 | 1250 | 6 | WITH | PRESSURE WAS 30Pa | C12A7 | 96.6 | $1.4 \times 10^{21}$ | 15 |
| RELATIVE EXAMPLE 6 | 1200 | 6 | WITH | | C12A7+HETERO-FACIES | 94.0 | $3.0 \times 10^{19}$ | 0.2 |
| RELATIVE EXAMPLE 7 | 1420 | 6 | WITH | | C12A7+HETERO-FACIES | 93.9 | $5.2 \times 10^{19}$ | 0.4 |

(continued)

| EXAMPLE | SINTERING TEMPERATURE (°C) | TIME (H) | Al VAPOR | OTHERS | CRYSTAL-LINE STRUC-TURE | RELATIVE DENSITY (%) | ELECTRON DENSITY (cm$^{-3}$) | ELECTRICAL CONDUCTIV-ITY (S/cm) |
|---|---|---|---|---|---|---|---|---|
| RELATIVE EXAMPLE 8 | 1250 | 6 | WITH | FIRST AND SECOND CARBON CONTAINERS WERE NOT USED | C12A7 | 93.0 | $1.2 \times 10^{19}$ | 0.1 |
| RELATIVE EXAMPLE 9 | 1250 | 6 | WITH (BODY DIRECTLY CONTACT SOURCE) | | C12A7 | 91.4 | $1.4 \times 10^{21}$ | 15 |
| RELATIVE EXAMPLE 10 | 1600 | 2 | WITHOUT | N$_2$ ATMOSPHERE | C12A7 | - | $3.4 \times 10^{19}$ | - |
| RELATIVE EXAMPLE 11 | 1300 | 6 | WITHOUT | N$_2$ ATMOSPHERE | C12A7 | - | $4.8 \times 10^{21}$ | - |

The present application is based on and claims the benefit of priority of Japanese Priority Application No. 2011107902 filed on May 13, 2011, and Japanese Priority Application No. 2011-223029 filed on October 7, 2011.

[Numerals]

| | |
|---|---|
| 100 | apparatus |
| 120 | carbon container |
| 130 | carbon cover |
| 140 | partition plate |
| 145 | heat-resisting tray |
| 150 | aluminum metal powder layer |
| 160 | body to be processed |
| 170 | exhaust port |
| 300 | apparatus |
| 310 | alumina container |
| 315 | alumina cover |
| 320 | aluminum layer |
| 325 | alumina block |
| 328 | alumina plate |
| 330 | first carbon container |
| 335 | carbon cover |
| 350 | second carbon container |
| 355 | carbon cover |
| SC1 | compact body |

**Claims**

1. A method of manufacturing a high electrical conductive mayenite compound, comprising:

   (1) a step of preparing a mayenite compound powder; and
   (2) a step of placing a body to be processed including the compound powder prepared in the step (1) in the presence of carbon monoxide gas and aluminum vapor supplied from an aluminum source without contacting the aluminum source, and holding the body to be processed at a temperature range of 1230 °C to 1415 °C under reducing atmosphere.

2. The method of manufacturing the high electrical conductive mayenite compound according to claim 1, wherein the step (2) is performed under a state where the body to be processed and the aluminum source are put in a container containing carbon.

3. The method of manufacturing the high electrical conductive mayenite compound according to claim 1 or 2, wherein the high electrical conductive mayenite compound having an aluminum carbide layer at a surface is obtained by the step (2).

4. The method of manufacturing the high electrical conductive mayenite compound according to any one of claims 1 to 3, wherein the body to be processed including the mayenite compound powder is a compact body including the mayenite compound powder.

5. The method of manufacturing the high electrical conductive mayenite compound according to any one of claims 1 to 4, wherein the step (2) is performed under a reduced pressure environment less than or equal to 100 Pa, or under inert-gas, except nitrogen, atmosphere.

6. The method of manufacturing the high electrical conductive mayenite compound according to any one of claims 1 to 5, wherein the high electrical conductive mayenite compound whose electron density is more than or equal to 3 $\times 10^{20}$ cm$^{-3}$ is obtained.

**Patentansprüche**

1. Verfahren zur Herstellung einer elektrisch hochleitfähigen Mayenit-Verbindung, umfassend:

    (1) einen Schritt zum Herstellen eines Mayenit-Verbindungspulvers; und
    (2) einen Schritt zum Anordnen eines das in Schritt (1) hergestellte Verbindungspulver enthaltenden zu verarbeitenden Körpers in Gegenwart von Kohlenmonoxidgas und Aluminiumdampf, bezogen von einer Aluminiumquelle ohne Kontaktieren der Aluminiumquelle, und Halten des zu verarbeitenden Körpers bei einem Temperaturbereich von 1230°C bis 1415°C unter reduzierender Atmosphäre.

2. Verfahren zur Herstellung der elektrisch hochleitfähigen Mayenit-Verbindung nach Anspruch 1, wobei der Schritt (2) unter einem Zustand durchgeführt wird, bei dem der zu verarbeitende Körper und die Aluminiumquelle in einen Kohlenstoff enthaltenden Behälter gegeben werden.

3. Verfahren zur Herstellung der elektrisch hochleitfähigen Mayenit-Verbindung nach Anspruch 1 oder 2, wobei die elektrisch hochleitfähige Mayenit-Verbindung mit einer Aluminiumcarbidschicht auf einer Oberfläche durch den Schritt (2) erhalten wird.

4. Verfahren zur Herstellung der elektrisch hochleitfähigen Mayenit-Verbindung nach einem der Ansprüche 1 bis 3, wobei der das Mayenit-Verbindungspulver enthaltende zu verarbeitende Körper ein das Mayenit-Verbindungspulver enthaltender kompakter Körper ist.

5. Verfahren zur Herstellung der elektrisch hochleitfähigen MayenitVerbindung nach einem der Ansprüche 1 bis 4, wobei der Schritt (2) unter einer Umgebung von vermindertem Druck von weniger als oder gleich 100 Pa, oder unter Inertgas-, ausgenommen Stickstoff-, Atmosphäre durchgeführt wird.

6. Verfahren zur Herstellung der elektrisch hochleitfähigen Mayenit-Verbindung nach einem der Ansprüche 1 bis 5, wobei die elektrisch hochleitfähige Mayenit-Verbindung, deren Elektronendichte mehr als oder gleich $3 \times 10^{20}$ cm$^{-3}$ ist, erhalten wird.


**Revendications**

1. Méthode de fabrication d'un composé de mayénite fortement électroconducteur, comprenant les étapes consistant à :

    (1) une étape consistant à préparer une poudre de composé de mayénite ; et
    (2) une étape consistant à placer un corps devant être traité comprenant la poudre de composé préparée à l'étape (1) en présence d'un gaz de monoxyde de carbone et de vapeur d'aluminium fournie à partir d'une source d'aluminium sans mise en contact avec la source d'aluminium, et à maintenir le corps devant être traité à une température dans la plage de 1230°C à 1440°C sous une atmosphère de réduction.

2. Méthode de fabrication du composé de mayénite fortement électroconducteur selon la revendication 1, dans laquelle l'étape (2) est effectuée dans un état où le corps devant être traité et la source d'aluminium sont disposés dans un conteneur contenant du carbone.

3. Méthode de fabrication du composé de mayénite fortement électroconducteur selon la revendication 1 ou 2, dans laquelle le composé de mayénite fortement électroconducteur ayant une couche de carbure d'aluminium au niveau d'une surface est obtenu par l'étape (2).

4. Méthode de fabrication du composé de mayénite fortement électroconducteur selon l'une quelconque des revendications 1 à 3, dans laquelle le corps devant être traité comprenant la poudre de composé de mayénite est un corps compact incluant la poudre de composé de mayénite.

5. Méthode de fabrication du composé de mayénite fortement électroconducteur selon l'une quelconque des revendications 1 à 4, dans laquelle l'étape (2) est effectuée sous un environnement de pression réduite inférieure ou égale à 100 Pa, ou sous une atmosphère de gaz inerte, à l'exception de l'azote.

6. Méthode de fabrication du composé de mayénite fortement électroconducteur selon l'une quelconque des revendications 1 à 5, dans laquelle le composé de mayénite fortement électroconducteur dont la densité électronique est supérieure ou égale à $3 \times 10^{20}$ cm$^{-3}$ est obtenu.

# FIG.1

START

(1) PREPARE MAYENITE COMPOUND POWDER  ～S210

(2) PLACE BODY TO BE PROCESSED INCLUDING COMPOUND POWDER PREPARED IN STEP (1) IN PRESENCE OF CARBON MONOXIDE GAS AND ALUMINUM VAPOR SUPPLIED FROM ALUMINIUM SOURCE WITHOUT CONTACTING ALUMINIUM SOURCE, AND HOLD BODY TO BE PROCESSED AT TEMPERATURE RANGE OF 1230 °C TO 1415 °C UNDER REDUCING ATMOSPHERE  ～S220

END

# FIG.2

TO EXHAUST SYSTEM

⇧ ⌐170

<u>100</u>

~130

120

160

140

150

145

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005000741 A
- WO 2006129674 A
- WO 2010074092 A
- WO 2010041558 A

- WO 2010132467 A
- JP 2011107902 B
- JP 2011223029 A

**Non-patent literature cited in the description**

- **F.M.LEA ; C.H.DESCH.** The Chemistry of Cement and Concrete. Edward Arnold&Co, 1956, 52